# EUROPÄISCHE PATENTSCHRIFT

(11) **EP 3 588 655 B1**
(45) Veröffentlichungstag und Bekanntmachung des Hinweises auf die Patenterteilung: **24.03.2021**
(21) Anmeldenummer: 19174641.1
(22) Anmeldetag: 15.05.2019
(51) Int. Cl.: H01M 10/04, H01M 2/10, B62M 6/90

(54) **TOLERANZAUSGLEICHSELEMENT FÜR EIN HALTESYSTEM EINES ENERGIESPEICHERS**
TOLERANCE COMPENSATION ELEMENT FOR A HOLDING SYSTEM OF AN ENERGY STORAGE DEVICE
ÉLÉMENT DE COMPENSATION DE TOLÉRANCE POUR UN SYSTÈME DE MAINTIEN D'UN ACCUMULATEUR D'ÉNERGIE

(30) Priorität: 29.06.2018 DE 102018210738
(43) Veröffentlichungstag der Anmeldung: 01.01.2020
(73) Patentinhaber: Robert Bosch GmbH, 70442 Stuttgart (DE)
(72) Erfinder: Schumacher, Christoph, 72144 Dusslingen (DE); Mehlo, Dennis, 72762 Reutlingen (DE); Koeder, Thilo, 70839 Gerlingen (DE)

(56) Entgegenhaltungen:
- EP-A1- 1 982 909
- EP-A1- 3 067 259
- EP-A1- 3 316 342
- EP-A2- 2 280 436
- WO-A1-2013/171205
- WO-A1-2017/009637
- DE-A1-102010 005 222
- DE-A1-102014 224 907
- DE-U1-202013 103 315

## Beschreibung

Die Erfindung betrifft ein Toleranzausgleichselement zur Anwendung in einem Haltesystem eines Energiespeichers.

### Stand der Technik

Beim Einsetzen eines Energiespeichers (z.B. eines Akkumulators oder einer Batterie) in entsprechende Haltesysteme besteht das generelle Problem, eine ausreichende elektrische Kontaktierung mit einer mechanischen Befestigung bzw. Arretierung zu verbinden, um ungewollte Bewegungen zu verhindern. So kann der Energiespeicher bei einer nicht ausreichend gegen Bewegungen gesicherten Befestigung neben einer fehleranfälligen elektrischen Versorgung auch eine Beschädigung des Energiespeichers nach sich ziehen.

Um eine derartige Fixierung bzw. für die Kontaktierung notwendige Positionierung zu erreichen und beizubehalten, werden die Abmessungen des Haltesystems bis auf kleine Toleranzen an die Größe des Energiespeichers angepasst. Darüber hinaus werden typischerweise Federelemente eingesetzt, die zum einen den Energiespeicher mittels einer Vorspannkraft in der Halterung, z.B. einer Schale, halten und zum anderen den Energiespeicher elektrisch kontaktieren. Durch eine derartige Feder wird zudem ein Toleranzausgleich vorgenommen, so dass ein Einsetzen und ein Entnehmen durch das Zusammendrücken bzw. das reversible Stauchen der Feder möglich is Ein Beispiel hierfür stellt die DE2014 224907 A1 dar.

Durch die starre Ausgestaltung mittels einer metallischen Feder wird jedoch nur ungenügend eine entsprechende Entkopplung des Haltesystems vom Energiespeicher bezüglich von außen eingebrachten Vibrationen und Schwingungen erreicht. Da auch derartige Schwingungen auf die dauerhafte und zuverlässige elektrische Kontaktierung sowie mechanische Befestigung Auswirkungen haben können, wird mit der vorliegenden Erfindung ein Element vorgeschlagen, welches gemeinsam alle drei Funktionen ermöglicht.

### Offenbarung der Erfindung

Mit der vorliegenden Erfindung wird ein Toleranzausgleichselement für ein Haltesystem beschrieben, welches dazu geeignet ist, einen Energiespeicher aufzunehmen. Darüber hinaus wird auch ein mit diesem Toleranzausgleichselement ausgestattetes Halteelement beansprucht. Der Einsatz eines derartigen Toleranzausgleichselement ist besonders für einen Energiespeicher bzw. ein Haltesystem eines Energiespeichers in einem Fahrzeug, insbesondere in einem Elektrofahrrad vorgesehen, wobei die Anwendung nicht darauf beschränkt sein soll.

Das Haltesystem, welches mit dem erfindungsgemäßen Toleranzausgleichselement ausgestattet ist, weist ein erstes Ende auf, an dem ein erstes Ende des Energiespeichers anliegt sowie ein zweites Ende, an dem ein zweites Ende des Energiespeichers anliegt. Dabei sind sowohl die beiden Enden des Haltesystems als auch des Energiespeichers bevorzugt gegenüber angeordnet. Der Kern der Erfindung besteht dabei darin, dass wenigstens ein Toleranzausgleichselement vorgesehen ist, welches entweder in einem ersten Bereich, d.h. im Bereich der ersten Enden des Haltesystem und des Energiespeichers, oder in einem zweiten Bereich, d.h. im Bereich der zweiten Enden des Haltesystem und des Energiespeichers, angeordnet ist. Optional kann dabei auch vorgesehen sein, dass in beiden Bereichen jeweils mindestens ein Toleranzausgleichselement angeordnet ist.

Der Vorteil eines derartigen Toleranzausgleichselements besteht dabei darin, dass durch dieses Element ein Ausgleich hinsichtlich der Abmessungen zwischen Aufnahme des Energiespeichers in dem Haltesystems und der Abmessungen des Energiespeichers gleichzeitig mit der Erzeugung einer Vorspannungskraft auf das Haltesystem zur Fixierung/Befestigung sowie Positionierung hinsichtlich der elektrischen Kontaktierung vorgenommen werden kann. Derartige Abweichungen in den Abmessungen können beispielsweise daher kommen, dass das Haltesystem und der Energiespeicher von unterschiedlichen Anbietern stammen.

Besonders vorteilhaft stellt sich die Erfindung für den Fall dar, dass das Toleranzausgleichselement verformbar ausgestaltet ist. Hierbei sei besonders die Fähigkeit genannt, dass das Toleranzausgleichselement gestaucht werden kann, wobei vorgesehen ist, dass die dabei auftretende Verformung und insbesondere die Stauchung reversibel ist. Dabei kann sowohl das ganze Toleranzausgleichselement oder nur ein Teil verformbar ausgestaltet sein. Optional ist dabei vorgesehen, dass das Toleranzausgleichselement von dem Energiespeicher in Längsrichtung in wenigstens einem ersten Teilbereich eine derartige Verformung aufweist, wobei zumindest in einem zweiten Teilbereich das Toleranzausgleichselement eine im Wesentlichen konstante Gegenkraft während des Stauchens bzw. des Verformens aufweist. Dabei ist insbesondere vorgesehen, dass der zweite Teilbereich wenigstens einen Teil des gesamten stauchbaren Bereichs des ersten Teilbereichs ausmacht.

In einer Ausgestaltung der Erfindung ist das Toleranzausgleichselement derart ausgestaltet, dass es Vibrationen und Schwingungen absorbiert, welche von dem Haltesystem und/oder dem Energiespeicher übertragen werden. Hierdurch kann eine Übertragung von Vibrationen und/oder Schwingungen an die jeweils andere Vorrichtung verhindert werden.

Erfindungsgemäß besteht das Toleranzausgleichselement wenigstens teilweise aus einem viskoeleastischen Werkstoff. Dabei kann insbesondere vorgesehen sein, dass wenigstens der Bereich des Toleranzausgleichsmaterials der im ersten oder zweiten Teilbereich der Verformung gestaucht wird, aus dem viskoelastischen Werkstoff besteht. Weiterhin ist es erfindungsgemäß vorgesehen, dass sich das Toleranzausgleichselement wie ein Kelvin-Körper verhält.

Die Fixierung bzw. Positionierung des Energiespeichers im Haltesystem durch das Toleranzausgleichselement kann auch dazu genutzt werden, die Positionierung bzw. Ausrichtung des Energiespeichers auf eine an einem Ende des Haltesystems vorgesehene Arretierungseinrichtung, z.B. ein Schloss oder ein Riegel, zu verbessern. Durch eine genauere und eindeutige Positionierung sowie der Verhinderung der ungewollten Beweglichkeit des Energiespeichers in der Halterung kann die Arretierung deutlich verbessert und der Verschleiß an der Arretierungseinrichtung minimiert werden.

Das Toleranzausgleichselement kann derart gestaltet sein, dass es sowohl auf eines der Enden des Haltesystems und/oder des Energiespeichers aufgebracht und dort befestigt werden. Dabei kann vorgesehen sein, dass Öffnungen in dem Toleranzausgleichselement vorgesehen sind, durch die eine elektrische Kontaktierung des Energiespeichers und/oder eine mechanische Befestigung ermöglicht wird. Darüber hinaus kann das Toleranzausgleichselement auch auf eines der Enden geklebt sein.

In einer Weiterbildung der Erfindung kann vorgesehen sein, dass das Toleranzausgleichselement bis auf die Öffnungen einen Großteil des Endes des Haltesystems und/oder des Energiespeichers bedeckt. Alternativ kann aber auch vorgesehen sein, dass mehrere Toleranzausgleichselemente auf wenigstens einer Endfläche des Haltesystems und/oder des Energiespeichers verteilt angeordnet sind. Hierbei ist insbesondere vorgesehen, dass diese mehreren Toleranzausgleichselemente derart auf der Endfläche verteilt sind, dass sie die flächige Kraft des entsprechenden Gegenelements aufnehmen können.

Das wenigstens eine Toleranzausgleichselement kann aus Moosgummi bestehen oder als Gummipuffer ausgestaltet sein. Daneben besteht auch die Möglichkeit, das Toleranzausgleichselement als Schaumelement zu gestalten.

Weitere Vorteile ergeben sich aus der nachfolgenden Beschreibung von Ausführungsbeispielen bzw. aus den abhängigen Patentansprüchen.

### Kurze Beschreibung der Zeichnungen

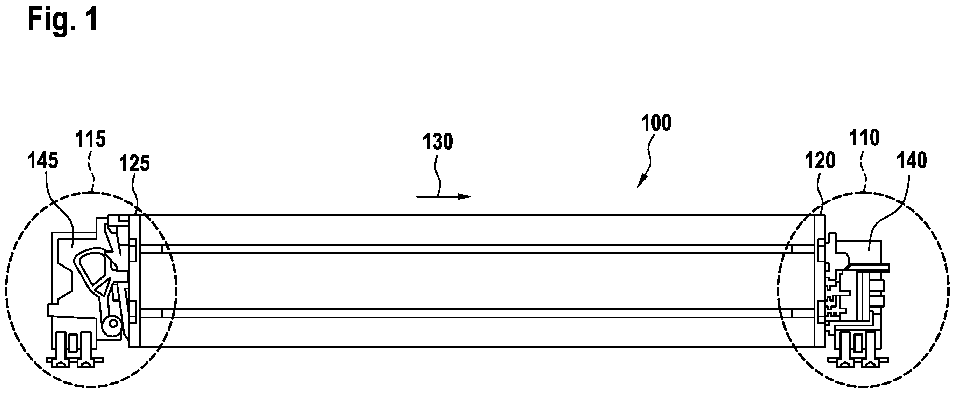

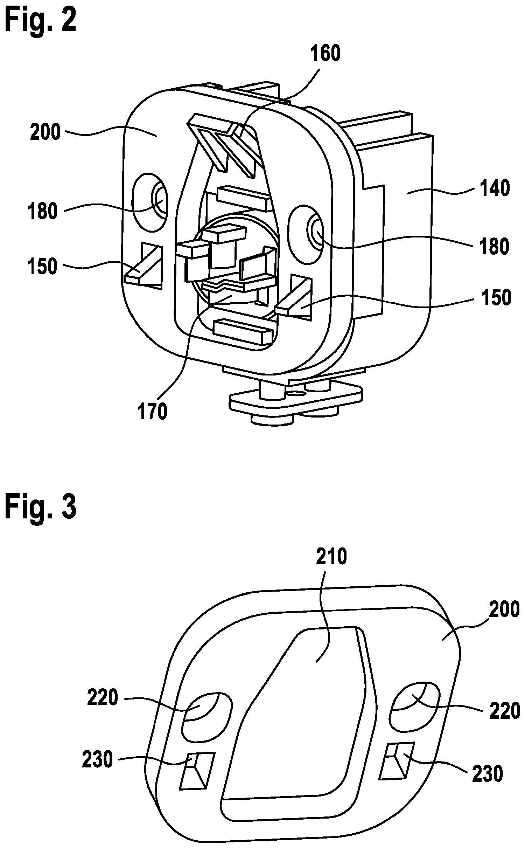

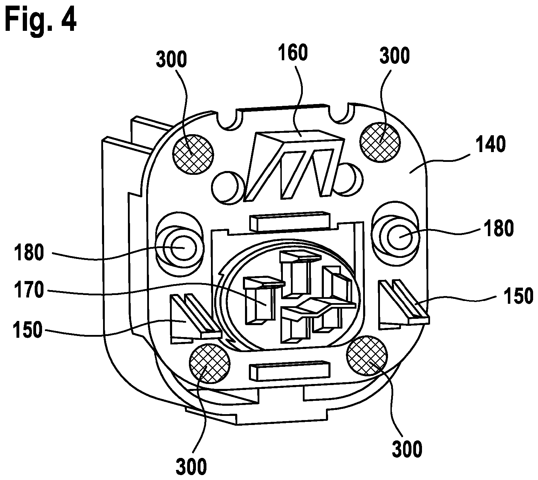

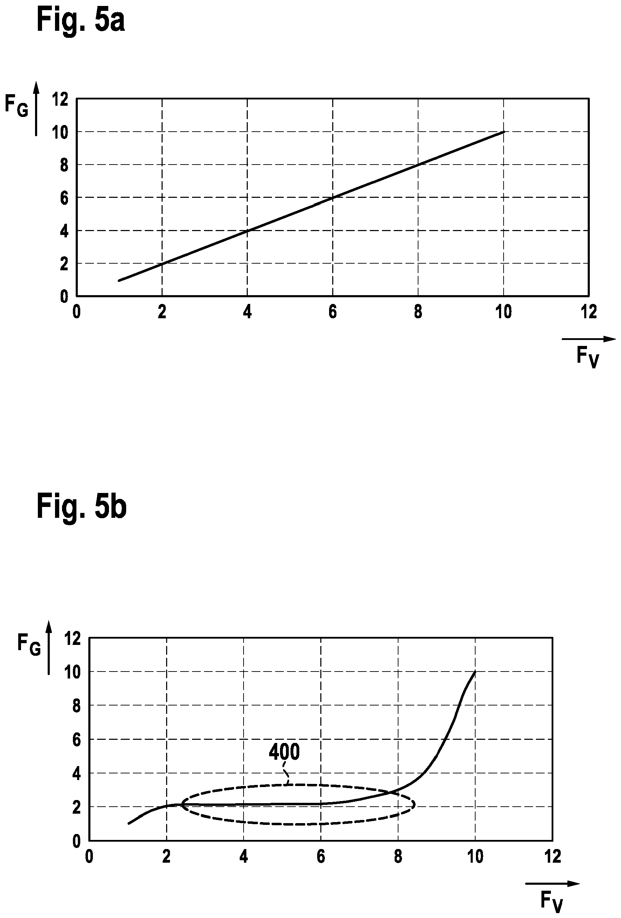

Figur 1 zeigt ein Haltesystem bestehend aus zwei Enden zur Aufnahme eines Energiespeicher. In der Figur 2 ist ein erstes Ausführungsbeispiel der Anordnung des Toleranzausgleichselements an einem ersten Ende eines Haltesystems dargestellt. Eine Detailansicht des in der Figur 2 verwendeten Toleranzausgleichselements ist in Figur 3 dargestellt. Ein zweites Ausführungsbeispiel mit mehreren Toleranzausgleichselementen ist in Figur 4 ebenfalls an einem ersten Ende eines Haltesystems dargestellt. In den Diagrammen der Figuren 5a und 5b wird ein Verhalten von verformbaren Toleranzausgleichselementen erläutert.

### Ausführungsformen der Erfindung

Wie bereits eingangs ausgeführt, werden Energiespeicher in Form von Akkumulatoren und/oder Batterien in entsprechende Halterungen eingebracht, um diese gegen Bewegung zu fixieren und eine elektrische Kontaktierung zu ermöglichen. Um diese beiden Funktionen zu verbessern und zusätzlich Vibrationen und Schwingungen zu dämpfen, die sich nachteilig auf die Befestigung sowie die Kontaktierung auswirken können, wird im Folgenden ein erfindungsgemäßes Toleranzausgleichselement beschrieben.

Beispielhaft wird für die Beschreibung der Erfindung gemäß der Figur 1 ein Haltesystem bestehend aus einem ersten Ende 140 und einem zweiten Ende 145 beschrieben. Dabei sind diese beiden Enden im vorliegenden Bespiel baulich nicht miteinander verbunden und mittels geeigneter Befestigungen im Rahmen eines Elektrofahrrads befestigt. Diese Beschreibung des Haltesystems soll jedoch für die Erfindung bzw. die Anwendung des Toleranzausgleichselements nicht einschränkend sein, so dass auch andere Haltesysteme mit der Erfindung ausgestattet werden können.

In das Haltesystem wird ein Energiespeicher 100 eingesetzt, dessen erstes Ende 120 in einem ersten Bereich 110 mit dem ersten Ende 140 des Haltesystems verbunden ist. Auf der gegenüberliegenden Seite des Energiespeichers 100 ist ein zweites Ende 125 vorgesehen, welches in einem zweiten Bereich 115 mit dem zweiten Ende 145 des Haltesystems verbunden ist. Im vorliegenden Beispiel weist das erste Ende 140 des Haltesystems eine elektrische Kontaktierung 170 auf, in die eine entsprechende Kontaktierung des ersten Endes 120 des Energiespeichers eingreifen kann. Auf der anderen Seite des Energiespeichers 100 ist hingegen im Bereich 115 eine mechanische Befestigung mittels einer lösbaren Fixierung bzw. Verriegelung vorgesehen. Selbstverständlich können die Funktionen des ersten und zweiten Bereichs 110 und 115 auch getauscht sein.

Erfindungsgemäß ist nun vorgesehen, dass auf dem ersten Ende 140 des Haltesystems das Toleranzausgleichselement 200 aufgebracht wird. Hierbei ist darauf zu achten, dass das Toleranzausgleichselement 200 neben einer Öffnung 210 für die am ersten Ende 140 des Haltesystems vorgesehene Kontaktierungselement 170 weitere Öffnungen 220 und 230 aufweist, durch die zusätzliche mechanische Befestigungselemente 150 bzw. 160 durchführen oder die Zugänge für Schrauben 180 ermöglichen (siehe Figur 2 und 3).

Durch das Einsetzen des Energiespeichers 100 in das Haltesystem wird in dem vorliegenden Beispiel zunächst eine Kontaktierung über das Kontaktierungselement 170 erzeugt. Bei diesem Einsetzen in Längsrichtung 130 wird das auf dem ersten Ende 140 des Haltesystems aufgebrachte Toleranzausgleichselement 200 gestaucht. Diese Stauchung erzeugt aufgrund der reversiblen Ausgestaltung des Toleranzausgleichselement 200, z.B. mittels eines als Kelvin-Körpers wirkenden viskoelastischen Werkstoffes, eine Gegenkraft, die der Stauchung entgegenwirkt. Diese Gegenkraft wirkt dabei entgegen der ursprünglich aufgebrachten Kraft beim Einsetzen auf den Bereich 115 und verstärkt dort die ohnehin vorgesehene mechanischen Befestigung bzw. Arretierung/Fixierung.

Anhand der Figur 4 wird ein zweites Ausführungsbeispiel ebenfalls anhand des ersten Endes 140 des Haltesystems dargestellt. Hierbei ist die Fläche des ersten Endes 140 des Haltesystems nicht wie im ersten Ausführungsbeispiel bis auf die Öffnungen zum Großteil bedeckt. Stattdessen werden nur punktuell Toleranzausgleichselemente 300 auf der Fläche des ersten Endes 140 des Haltesystems verteilt, die gemeinsam die Kraft beim Einsetzen des Energiespeichers 100 aufnehmen und ebenfalls gemeinsam zur Erzeugung der Gegenkraft wirken.

In den Diagrammen der Figuren 5a und 5b werden unterschiedliche Ausgestaltungen des wenigstens einen Toleranzausgleichselements 200 bzw. 300 hinsichtlich des verwendeten Werkstoffes aufgezeigt. Im Diagramm der Figur 5a wird beispielhaft das Verhältnis der auf das Material einwirkenden, die Verformung bewirkende Kraft Fv zur Gegenkraft F_{G}, die als Gegenkraft die Rückstellung des Materials in die Ausgangslage bewirkt, bei einem herkömmlichen elastischen Werkstoff aufgetragen. Wie deutlich zu erkennen ist, wird bei einer größeren die Verformung bzw. die Stauchung bewirkende Presskraft Fv auf das Material eine linear größere Gegenkraft F_{G} erzeugt. Bei der Verwendung eines viskoelastischen Werkstoffs zur Ausgestaltung des wenigstens einen Toleranzausgleichselements 200 bzw. 300 kann die Reaktion des Systems jedoch variiert werden. So kann wie im Diagramm der Figur 5b dargestellt wird, ein Bereich 400 im Verhältnis der Verformungskraft Kraft Fv und Gegenkraft F_{G} eingestellt werden, in dem die Gegenkraft F_{G} im Wesentlichen auch bei einer Variation der Verformungskraft Fv konstant ist. Diese Konstanz der Gegenkraft F_{G} erzeugt im Haltesystem eine konstante mechanische Vorspannungskraft auf den gegenüber liegenden Teil des Haltesystems. Sowohl durch die Wahl des Werkstoffes für das Toleranzausgleichselements als auch durch eine Anpassung von dessen Dicke lassen sich so Fertigungstoleranzen beim Haltesystem und auch beim Energiespeicher ausgleichen. Zudem wird durch eine mögliche Stauchung des Toleranzausgleichsmaterials ein Einsetzen als auch ein Entnehmen des Energiespeichers aus dem Haltesystem erleichtert.

## Patentansprüche

1. Toleranzausgleichselement (200, 300) für ein Haltesystem eines Energiespeicher (100),
wobei bei dem Haltesystem mit dem Energiespeicher (100)
• in einem ersten Bereich (110) ein erstes Ende (120) des Energiespeichers (100) an einem ersten Endstück (140) des Haltesystems und
• in einem zweiten Bereich (115) ein zweites Ende (125) des Energiespeichers (100) an einem zweiten Endstück (145) des Haltesystems
angeordnet ist,
wobei das wenigstens eine Toleranzausgleichselement (200, 300) im ersten und/oder zweiten Bereich (120, 125) zwischen dem Energiespeicher (100) und einem Endstück (140, 145) des Haltesystems angeordnet ist,
**dadurch gekennzeichnet, dass**
das Toleranzausgleichselement (200, 300) wenigstens teilweise aus einem viskoelastischen Werkstoffe besteht, wobei vorgesehen ist, dass sich das Toleranzausgleichselement (200, 300) wie ein Kelvin-Körper verhält.

2. Toleranzausgleichselement (200, 300) nach Anspruch 1, **dadurch gekennzeichnet, dass** das Toleranzausgleichelement (200, 300) wenigstens einen ersten Teilbereich der Verformung aufweist, der reversibel ist, wobei insbesondere vorgesehen ist, dass der erste Teilbereich der Verformung eine Stauchung beinhaltet.

3. Toleranzausgleichelement (200, 300) nach Anspruch 1 oder 2, **dadurch gekennzeichnet, dass** das Toleranzausgleichselement (200, 300) einen zweiten Teilbereich (400) der Verformung aufweist, welcher eine im Wesentlichen konstante Gegenkraft erzeugt, wobei insbesondere vorgesehen ist, dass sich der zweite Teilbereich innerhalb des ersten Teilbereichs der Verformung befindet.

4. Toleranzausgleichelement (200, 300) nach einem der vorherigen Ansprüche, **dadurch gekennzeichnet, dass** das Toleranzausgleichselement (200, 300) Vibrationen absorbiert, welche von dem Energiespeicher (100) oder dem Haltesystem übertragen werden.

5. Toleranzausgleichelement (200, 300) nach einem der vorherigen Ansprüche, **dadurch gekennzeichnet, dass** das wenigstens ein Toleranzausgleichselement (200, 300) an einem Endstück (140, 145) des Haltesystems befestigt ist, wobei insbesondere vorgesehen ist, dass das Toleranzausgleichselement (200, 300) Öffnungen (210, 220, 230) aufweist, durch die eine elektrische Kontaktierung und/oder eine mechanische Befestigung des Energiespeichers (100) an dem Endstück (140, 145) ermöglicht wird.

6. Haltesystem mit einem Energiespeicher (100), wobei in dem Haltesystem ein Toleranzausgleichselement (200, 300) nach einem der Ansprüche 1 bis 5 vorgesehen ist,
wobei bei dem Haltesystem mit dem Energiespeicher (100)
• in einem ersten Bereich (110) ein erstes Ende (120) des Energiespeichers (100) an einem ersten Endstück (140) des Haltesystems und
• in einem zweiten Bereich (115) ein zweites Ende (125) des Energiespeichers (100) an einem zweiten Endstück (145) des Haltesystems
angeordnet ist,
wobei das wenigstens eine Toleranzausgleichselement (200, 300) im ersten und/oder zweiten Bereich (120, 125) zwischen dem Energiespeicher (100) und einem Endstück (140, 145) des Haltesystems angeordnet ist,
**dadurch gekennzeichnet, dass**
das Toleranzausgleichselement (200, 300) wenigstens teilweise aus einem viskoelastischen Werkstoffe besteht, wobei vorgesehen ist, dass sich das Toleranzausgleichselement (200, 300) wie ein Kelvin-Körper verhält.

7. Haltesystem mit einem Energiespeicher (100) nach Anspruch 6, **dadurch gekennzeichnet, dass** das wenigstens eine Toleranzausgleichselement (200, 300) an einem Endstück (140, 145) des Haltesystems befestigt ist, wobei insbesondere vorgesehen ist, dass das Toleranzausgleichselement (200, 300) Öffnungen (210, 220, 230) aufweist, durch die eine elektrische Kontaktierung und/oder eine mechanische Befestigung des Energiespeichers (100) an dem Endstück (140, 145) ermöglicht wird.

8. Haltesystem mit einem Energiespeicher (100) nach Anspruch 6 oder 7, **dadurch gekennzeichnet, dass** der Energiespeicher (100) in Längsrichtung (130) in das Haltesystem eingebracht und das wenigstens eine Toleranzausgleichselement (200, 300) beim Einbringungsvorgang in Längsrichtung (130) im Sinne einer Stauchung reversibel verformt wird, wobei insbesondere vorgesehen ist, dass die Stauchung eine Gegenkraft entgegen der Längsrichtung (130) erzeugt.

9. Haltesystem mit einem Energiespeicher (100) nach Anspruch 8, **dadurch gekennzeichnet, dass** das Toleranzausgleichselement (200, 300) im Bereich (120) der elektrischen Kontaktierung des Energiespeichers (100) an dem ersten Endstück (140) des Haltesystems befestigt ist, wobei vorgesehen ist, dass die erzeugte Gegenkraft auf die mechanische Befestigung des Energiespeichers im zweiten Bereich (125) an dem zweiten Endstück (145) des Haltesystems wirkt.

## Claims

1. Tolerance compensation element (200, 300) for a holding system of an energy accumulator (100), wherein in the holding system having the energy accumulator (100)
- in a first region (110) a first end (120) of the energy accumulator (100) is disposed on a first end piece (140) of the holding system, and
- in a second region (115) a second end (125) of the energy accumulator (100) is disposed on a second end piece (145) of the holding system,
wherein the at least one tolerance compensation element (200, 300) in the first region and/or the second region (120, 125) is disposed between the energy accumulator (100) and an end piece (140, 145) of the holding system,
**characterized in that**
the tolerance compensation element (200, 300) is at least in part composed of a viscoelastic material, wherein it is provided that the tolerance compensation element (200, 300) behaves like a Kelvin solid.

2. Tolerance compensation element (200, 300) according to Claim 1, **characterized in that** the tolerance compensation element (200, 300) comprises at least a first sub-region of the deformation, said first sub-region being reversible, wherein it is in particular provided that the first sub-region of the deformation contains a compression.

3. Tolerance compensation element (200, 300) according to Claim 1 or 2, **characterized in that** the tolerance compensation element (200, 300) comprises a second sub-region (400) of the deformation, said second sub-region generating a substantially consistent counterforce, wherein it is in particular provided that the second sub-region is situated within the first sub-region of the deformation.

4. Tolerance compensation element (200, 300) according to one of the preceding claims, **characterized in that** the tolerance compensation element (200, 300) absorbs vibrations that are transmitted by the energy accumulator (100) or the holding system.

5. Tolerance compensation element (200, 300) according to one of the preceding claims, **characterized in that** the at least one tolerance compensation element (200, 300) is fastened to an end piece (140, 145) of the holding system, wherein it is in particular provided that the tolerance compensation element (200, 300) has openings (210, 220, 230) by way of which electrical contacting and/or mechanical fastening of the energy accumulator (100) at the end piece (140, 145) is enabled.

6. Holding system having an energy accumulator (100), wherein a tolerance compensation element (200, 300) according to one of Claims 1 to 5 is provided in the holding system, wherein in the holding system having the energy accumulator (100)
- in a first region (110) a first end (120) of the energy accumulator (100) is disposed on a first end piece (140) of the holding system, and
- in a second region (115) a second end (125) of the energy accumulator (100) is disposed on a second end piece (145) of the holding system,
wherein the at least one tolerance compensation element (200, 300) in the first region and/or the second region (120, 125) is disposed between the energy accumulator (100) and an end piece (140, 145) of the holding system,
**characterized in that**
the tolerance compensation element (200, 300) is at least in part composed of a viscoelastic material, wherein it is provided that the tolerance compensation element (200, 300) behaves like a Kelvin solid.

7. Holding system having an energy accumulator (100) according to Claim 6, **characterized in that** the at least one tolerance compensation element (200, 300) is fastened to an end piece (140, 145) of the holding system, wherein it is in particular provided that the tolerance compensation element (200, 300) has openings (210, 220, 230) by way of which electrical contacting and/or mechanical fastening of the energy accumulator (100) at the end piece (140, 145) is enabled.

8. Holding system having an energy accumulator (100) according to Claim 6 or 7, **characterized in that** the energy accumulator (100) is introduced into the holding system in the longitudinal direction (130), and the at least one tolerance compensation element (200, 300) in the introduction procedure is reversibly deformed in the sense of a compression in the longitudinal direction (130), wherein it is in particular provided that the compression generates a counterforce counter to the longitudinal direction (130) .

9. Holding system having an energy accumulator (100) according to Claim 8, **characterized in that** the tolerance compensation element (200, 300) in the region (120) of the electrical contacting of the energy accumulator (100) is fastened to the first end piece (140) of the holding system, wherein it is provided that the counterforce generated acts on the mechanical fastening of the energy accumulator in the second region (125) on the second end piece (145) of the holding system.

## Revendications

1. Élément de compensation des tolérances (200, 300) pour un système de maintien d'un accumulateur d'énergie (100),
avec lequel, au niveau du système de maintien comprenant l'accumulateur d'énergie (100)
* dans une première zone (110), une première extrémité (120) de l'accumulateur d'énergie (100) est disposée au niveau d'une première pièce d'extrémité (140) du système de maintien et
* dans une deuxième zone (115), une deuxième extrémité (125) de l'accumulateur d'énergie (100) est disposée au niveau d'une deuxième pièce d'extrémité (145) du système de maintien,
l'au moins un élément de compensation des tolérances (200, 300) étant disposé dans la première et/ou la deuxième zone (120, 125) entre l'accumulateur d'énergie (100) et une pièce d'extrémité (140, 145) du système de maintien, **caractérisé en ce que**
l'élément de compensation des tolérances (200, 300) est constitué au moins partiellement d'un matériau viscoélastique, en prévoyant que l'élément de compensation des tolérances (200, 300) se comporte comme un corps de Kelvin.

2. Élément de compensation des tolérances (200, 300) selon la revendication 1, **caractérisé en ce que** l'élément de compensation des tolérances (200, 300) possède au moins une première zone partielle de la déformation, laquelle est réversible, en prévoyant notamment que la première zone partielle de la déformation contient un écrasement.

3. Élément de compensation des tolérances (200, 300) selon la revendication 1 ou 2, **caractérisé en ce que** l'élément de compensation des tolérances (200, 300) possède une deuxième zone partielle (400) de la déformation, laquelle génère une force antagoniste essentiellement constante, en prévoyant notamment que la deuxième zone partielle se trouve à l'intérieur de la première zone partielle de la déformation.

4. Élément de compensation des tolérances (200, 300) selon l'une des revendications précédentes, **caractérisé en ce que** l'élément de compensation des tolérances (200, 300) absorbe les vibrations qui sont transmises par l'accumulateur d'énergie (100) ou par le système de maintien.

5. Élément de compensation des tolérances (200, 300) selon l'une des revendications précédentes, **caractérisé en ce que** l'au moins un élément de compensation des tolérances (200, 300) est fixé à une pièce d'extrémité (140, 145) du système de maintien, en prévoyant notamment que l'élément de compensation des tolérances (200, 300) possède des ouvertures (210, 220, 230) à travers lesquelles est rendue possible une mise en contact électrique et/ou une fixation mécanique de l'accumulateur d'énergie (100) au niveau de la pièce d'extrémité (140, 145) .

6. Système de maintien comprenant un accumulateur d'énergie (100), un élément de compensation des tolérances (200, 300) selon l'une des revendications 1 à 5 étant prévu dans le système de maintien,
avec lequel, au niveau du système de maintien comprenant l'accumulateur d'énergie (100)
* dans une première zone (110), une première extrémité (120) de l'accumulateur d'énergie (100) est disposée au niveau d'une première pièce d'extrémité (140) du système de maintien et
* dans une deuxième zone (115), une deuxième extrémité (125) de l'accumulateur d'énergie (100) est disposée au niveau d'une deuxième pièce d'extrémité (145) du système de maintien,
l'au moins un élément de compensation des tolérances (200, 300) étant disposé dans la première et/ou la deuxième zone (120, 125) entre l'accumulateur d'énergie (100) et une pièce d'extrémité (140, 145) du système de maintien, **caractérisé en ce que**
l'élément de compensation des tolérances (200, 300) est constitué au moins partiellement d'un matériau viscoélastique, en prévoyant que l'élément de compensation des tolérances (200, 300) se comporte comme un corps de Kelvin.

7. Système de maintien comprenant un accumulateur d'énergie (100) selon la revendication 6, **caractérisé en ce que** l'au moins un élément de compensation des tolérances (200, 300) est fixé à une pièce d'extrémité (140, 145) du système de maintien, en prévoyant notamment que l'élément de compensation des tolérances (200, 300) possède des ouvertures (210, 220, 230) à travers lesquelles est rendue possible une mise en contact électrique et/ou une fixation mécanique de l'accumulateur d'énergie (100) au niveau de la pièce d'extrémité (140, 145) .

8. Système de maintien comprenant un accumulateur d'énergie (100) selon la revendication 6 ou 7, **caractérisé en ce que** l'accumulateur d'énergie (100) est introduit dans la direction longitudinale (130) dans le système de maintien et l'au moins un élément de compensation des tolérances (200, 300), lors de l'opération d'introduction, est déformé de manière réversible dans la direction longitudinale (130) dans le sens d'un écrasement, en prévoyant notamment que l'écrasement génère une force antagoniste à l'opposé de la direction longitudinale (130).

9. Système de maintien comprenant un accumulateur d'énergie (100) selon la revendication 8, **caractérisé en ce que** l'élément de compensation des tolérances (200, 300) est fixé dans la zone (120) de mise en contact électrique de l'accumulateur d'énergie (100) au niveau de la première pièce d'extrémité (140) du système de maintien, en prévoyant que la force antagoniste générée agit sur la fixation mécanique de l'accumulateur d'énergie dans la deuxième zone (125) au niveau de la deuxième pièce d'extrémité (140) du système de maintien.
